(19) Europäisches Patentamt
European Patent Office
Office européen des brevets

(11) **EP 2 167 597 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **08760886.5**

(22) Anmeldetag: **12.06.2008**

(51) Int Cl.:
*C09D 167/08* (2006.01)        *C08L 67/08* (2006.01)
*C08F 283/01* (2006.01)        *C08L 33/06* (2006.01)
*C09D 133/06* (2006.01)        *C08L 35/06* (2006.01)
*C09D 135/06* (2006.01)        *C08F 2/20* (2006.01)
*C09D 5/02* (2006.01)

(86) Internationale Anmeldenummer:
**PCT/EP2008/057340**

(87) Internationale Veröffentlichungsnummer:
**WO 2008/152078 (18.12.2008 Gazette 2008/51)**

(54) **VOC-ARME WÄSSRIGE HYBRIDBINDEMITTEL**

LOW-VOC AQUEOUS HYBRID BINDER

LIANT HYBRIDE AQUEUX PAUVRE EN COV

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.06.2007 EP 07110413**

(43) Veröffentlichungstag der Anmeldung:
**31.03.2010 Patentblatt 2010/13**

(73) Patentinhaber: **BASF SE**
**67056 Ludwigshafen (DE)**

(72) Erfinder:
• **BALK, Roelof**
**67459 Böhl-Iggelheim (DE)**
• **ROLLER, Sebastian**
**68199 Mannheim (DE)**
• **DERSCH, Rolf**
**67434 Neustadt (DE)**
• **DITTRICH, Uwe**
**67125 Dannstadt-Schauernheim (DE)**

(56) Entgegenhaltungen:
**EP-A- 0 072 979     EP-A- 0 083 137**
**EP-A- 0 267 562     US-A- 4 116 903**

**Beschreibung**

Die vorliegende Erfindung betrifft ein Verfahren zur Herstellung VOC-armer wässriger Hybridbindemittel, sowie deren Verwendung in Anstrichmitteln, insbesondere in hochglänzenden Anstrichmitteln (Hochglanzlacken).

Bindemittel für Anstrichmittel lassen sich üblicherweise in zwei Gruppen einteilen: in lösemittelhaltige Systeme oder Systeme mit Wasser als Lösemittel oder Dispergiermedium.

Zu der ersten Gruppe gehört u.a. der überwiegende Teil der Alkyd-Binder; zu der zweiten gehören u.a. die Acrylat-Dispersionen.

Die erste Gruppe steht zur Zeit aus umweltpolitischen Gründen unter Beschuss und daher wäre eine Umstellung auf wasserbasierende Systeme mit niedrigem Anteil flüchtiger organischer Verbindungen (VOC-Gehalt) wünschenswert.

Die EP 1 382 663 offenbart wasseremulgierbare bzw. wasserverdünnbare Produkte. Die wasserverdünnbaren Öle oder Alkydharze werden mit cyclisch olefinisch ungesättigten Anhydriden umgesetzt.

EP 874 875 offenbart eine Hybridbindemittelzusammensetzung auf Wasserbasis sowie deren Verwendung als Komponente in einer Farb- oder Lackmischung, wobei die Hybridbindemittelzusammensetzung einen Trockengehaltanteil von 60 bis 95 Gew.-% besitzt.

DE 313 2937 offenbart ein Verfahren zur Herstellung von wasserverdünnbaren Harzzubereitungen auf Basis von Alkydharzen und/oder Polyacrylaten, wobei in einer ersten Stufe die wasserverdünnbare Alkydharz-Dispersion hergestellt wird und anschließend die so erhaltene Alkydharz-Dispersion in einer zweiten Verfahrensstufe mit Acrylsäure- bzw. Methacrylsäurederivaten polymerisiert wird.

In der US 6,333,378 werden wasserbasierte Alkyd-Acrylat-Hybridsysteme offenbart, die mittels einer Polymerisation einer vorher gescherten Miniemulsion eines Alkyds und mindestens eines Acrylatmonomers mit einer latent oxidativen Funktionalität hergestellt werden.

EP 083 137 beschreibt wässrige, oxidativ trocknende Beschichtungsmittel enthaltend monoethylenisch ungesättigte Verbindungen sowie Alkydharze sowie deren Verwendung zur Beschichtung von Metallen oder Holz. Bei der Herstellung des Bindemittels wird das Alkyd gleichzeitig mit den weiteren Monomeren in der Vorlage vorgelegt.

US 4,116,903 offenbart wässrige Lösungen von Alkydharzen und deren Verwendung als Emulgatoren zur Stabilisierung von Emulsionspolymerisaten. Auch hier wird das Alkyd zusammen mit den übrigen Monomeren in der Vorlage vorgelegt.

Diese Zusammensetzungen des Standes der Technik haben aber den Nachteil, dass sie nicht den gewünschten Anforderungen hinsichtlich Glanz und Oberflächenglätte entsprechen und einen hohen Anteil an Alkyden aufweisen.

Die Aufgabe der Erfindung bestand daher in der Entwicklung von wasserbasierten Alkyd-Acrylat-Hybridbindemitteln, deren Herstellung sowie deren Verwendung für Anstrichmittel, insbesondere für Hochglanzlacke und deren Formulierung, die sich durch einen sehr hohen Glanz und niedrigen Glanzschleier bei gleichzeitig hoher Deckkraft auszeichnen.

Erfindungsgemäß gelöst wurde die Aufgabe durch ein Verfahren zur Herstellung wässriger Bindemittelzusammensetzungen durch Emulsionspolymerisation von

(A) mindestens einem $C_1$-$C_{10}$-Alkyl(meth)acrylat, und/oder einer vinylaromatischen Verbindung mit bis zu 20 C-Atomen oder Mischungen davon (Monomere A),
(B) sowie gegebenenfalls weiteren Monomeren B und
(C) mindestens einem wasserlöslichen Alkydharz mit einem gewichtsmittleren Molekulargewicht zwischen 5000 und 40 000 g/mol,

dadurch gekennzeichnet, dass die Polymerisation der Monomere A sowie gegebenenfalls B und der Alkyde C in Form eines parallelen Zulaufverfahrens durchgeführt wird.

Mit dem erfindungsgemäß hergestellten Bindemittel wird ein sehr hoher Glanz und niedriger Harze erzeugt und es zeichnet sich einen niedrigen VOC-Gehalt aus.

Bevorzugt enthält das Emulsionscopolymerisat

(A) 20 bis 90 Gew.-% der Monomere A,
(B) 0 bis 20 Gew.-% weiterer Monomere B sowie
(C) 10 bis 60 Gew.-% Alkyd C.

Besonders bevorzugt enthält das Emulsionscopolymerisat

(A) 30 bis 79,5 Gew.-% Monomere A,
(B) 0,5 bis 20 Gew.-% weitere Monomere B sowie
(C) 20 bis 50 Gew.-% Alkyd C.

Ganz besonders bevorzugt enthält das Emulsionscopolymerisat

(A) 50 bis 70 Gew.-% Monomere A,
(B) 2 bis 10 Gew.-% weitere Monomere B sowie
(C) 20 bis 50 Ges.-% Alkyd C.

Als Hauptmonomere A zu nennen sind beispielsweise $C_1$-$C_{10}$-Alkyl(meth)acrylate, vorzugsweise Methylmethacrylat, Methylacrylat, Ethylacrylat, n-, iso- oder tert.-Butyl(meth)acrylat, 2-Propylheptylacrylat und 2-Ethylhexylacrylat oder Mischungen davon.

Als vinylaromatische Verbindungen der Monomere A kommen beispielsweise Styrol, Vinyltoluol, $\alpha$- und p-Methylstyrol, $\alpha$-Butylstyrol, 4-n-Butylstyrol, 4-n-Decylstyrol oder Mischungen davon und vorzugsweise Styrol, in Betracht.

Bevorzugte Kombinationen der Monomere A sind n-Butylacrylat, Styrol und Butyl(meth)acrylat, wobei der Styrol-Anteil kleiner gleich 25 Gew.-% beträgt.

Unter den weiteren Monomeren B versteht man z. B. Hydroxylgruppen enthaltende Monomere, insbesondere $C_1$-$C_{10}$-Hydroxyalkyl(meth)acrylate, (Meth)acrylamid, ethylenisch ungesättigte Säuren, insbesondere Carbonsäuren, wie (Meth)acrylsäure und deren Anhydride, Dicarbonsäuren und deren Anhydride oder Halbester, z. B. Itaconsäure, Maleinsäure, Fumarsäure und Maleinsäureanhydrid oder Mischungen davon, Ureido(meth)acrylate, Acetoacetoxyalkyl(meth)acrylate oder Diacetonacrylamid.

Bevorzugtes Monomer B ist Acetoacetoxyethyl(meth)acrylat mit einem Anteil < 5 Gew.-%.

Das Monomerengemisch A bzw. A und B hat eine derartige Zusammensetzung, dass, wenn es separat polymerisiert würde, es zu einem Polymer führen würde mit einer Glasübergangstemperatur $T_g$ kleiner 50 °C, aber > 20 °C, bevorzugt kleiner 40 °C und > 20 °C, besonders bevorzugt kleiner 30 °C und > 20 °C.

Unter der Glasübergangstemperatur $T_g$ wird hier die gemäß ASTM D 3418-82 durch Differentialthermoanalyse (DSC) ermittelte "mid-point temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Nach Fox (siehe Ullmanns Enzyklopädie der technischen Chemie, 4. Auflage, Band 19, Weinheim (1980), S. 17, 18) kann man die Glasübergangstemperatur $T_G$ abschätzen. Es gilt für die Glasübergangstemperatur von schwach bzw. unvernetzten Mischpolymerisaten bei großen Molmassen in guter Näherung:

$$\frac{1}{Tg} = \frac{X^1}{Tg^1} + \frac{X^2}{Tg^2} + \ldots\ldots \frac{X^n}{Tg^n}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, 5.ed. Weinheim, Vol. A 21 (1992) S. 169 oder aus J. Brandrup, E.H. Immergut, Polymer Handbook 3rd ed, J. Wiley, New York 1989 bekannt.

Unter einem Alkydharz (C) versteht man einen Polyester, der mit einem trocknenden Öl, einer Fettsäure oder dergleichen verestert ist (U. Poth, Polyester und Alkydharze, Vincentz Network 2005).

Unter dem Alkydharz (C) versteht man insbesonders eine, gegebenenfalls nach Neutralisation, wasserverdünnbare Alkydharzlösung basierend auf einem Alkydharz mit ausreichend hoher Säurezahl von vorzugsweise 30-65 mg KOH/g Alkydharz fest, und einem gewichtsmittleren Molekulargewicht von > 5000 und < 40000 g/mol, bevorzugt > 8000 und < 35000 g/mol und besonders bevorzugt > 10000 und < 35000 g/mol.

Die Molekulargewichte werden mit Größenausschlusschromatographie (SEC) bestimmt.

Unter Säurezahl versteht man die Menge Kaliumhydroxid, ausgedrückt in mg, die notwendig ist um 1 g der Probe zu neutralisieren.

Bevorzugte Alkydharze C sind beispielsweise die Produkte WorléeSol® 61A, Worlée-Sol® 61E, WorléeSol® 65A der Firma Worlée, und Synthalat® W46 oder Synthalat® W48 , der Firma Synthopol.

Das Verfahren zur Herstellung

Bei der Emulsionspolymerisation werden üblicherweise ionische und/oder nichtionische Emulgatoren und/oder Schutzkolloide bzw. Stabilisatoren als grenzflächenaktive Verbindungen verwendet. Eine ausführliche Beschreibung geeigneter Schutzkolloide findet sich in Houben-Weyl. Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest; $C_8$- bis $C_{36}$), ethoxylierte Mono-, Di- und Tri-Alkylphenole (EO-Grad: 3 bis 50, Alkylrest: $C_4$- bis $C_9$), Alkalimetallsalze von Dialkylestem der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$- bis $C_{18}$), von Alkylarylsulfonsäuren (alkylrest: $C_9$- bis $C_{18}$) und von Sulfaten ethoxylierter Fettalkohole.

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die Emulsionspolymerisation sind z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid.

Geeignet sind auch sogenannte Reduktions-, Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(11)sulfat/Natriumperoxodisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die Menge der Initiatoren beträgt im allgemeinen 0,1 bis 10 Gew.-%, bevorzugt 0,1 bis 5 Ges.-%, ganz besonders bevorzugt 0,4 bis 1 Gew.-% bezogen auf alle zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 150, vorzugsweise 50 bis 95°C, ganz besonders bevorzugt zwischen 80 und 95 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden.

In einem Zulaufgefäß wird dabei eine Präemulsion der Monomere A bzw. A und B und Emulgatoren hergestellt und parallel dazu wird in einem zweiten Zulaufgefäß eine wässrige neutralisierte Lösung mindestens eines wasserlösslichen Alkyds C gerichtet.

Anschließend werden diese beide Zuläufe parallel zu einem Polymerisationsgefäß zudosiert, wo entweder eine Saatdispersion vorgelegt, oder von einem Teil der Präemulsion A bzw. A und B und des Initiators in situ eine Saat gebildet wurde.

Üblicherweise erfolgt die Polymerisation über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zugeführt werden.

Parallel zu diesen beiden Zuläufen wird auch ein Initiatorzulauf gestartet.

Im Anschluss an die Polymerisation wird noch nachgerührt und eine chemische Desodorierung durchgeführt.

Selbstverständlich ist es auch möglich, ein Teil des neutralisierten wässrigen Alkydzulaufs im Reaktorgefäß vorzulegen, oder den Alkydzulauf früher zu beenden als den Präemulsionszulauf oder mit dem Alkydzulauf erst zu einem späteren Zeitpunkt als dem Präemulsionszulauf anzufangen.

Vorzugsweise wird aber nichts vorgelegt und der Alkydzulauf zeitgleich mit dem Präemulsionszulauf zudosiert. Dabei erreicht man eine sehr homogene Verteilung des Alkyds im gesamten Polymerisat. Das ist wesentlich für die Bildung von sehr glatten Oberflächen und hohem Glanz.

Die Art und Weise, in der der Initiator im Verlauf der radikalischen wässrigen Emulsionspolymerisation dem Polymerisationsgefäß zugegeben wird, ist dem Durchschnittsfachmann bekannt. Er kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren kann auch nach Ende der eigentlichen Emulsionspolymerisation, d. h. nach einem Umsatz der Monomeren von mindestens 95 %, Initiator zugesetzt werden. Üblicherweise werden Red-Ox-Systeme eingesetzt. Im Anschluss kann auch eine physikalische Desodorierung durchgeführt werden.

Es wird eine wässrige Polymerdispersion erhalten, welche üblicherweise einen Polymergehalt (Festgehalt) von 20 bis 70 Gew.-%, vorzugsweise 40 bis 60 Gew.-%, bezogen auf die Polymerdispersion aufweist.

Vorteil des erfindungsgemäßen Verfahrens ist die relativ niedrige Viskosität der Präemulsion und des Alkydzulaufs. Sowohl bei einer Präemulsion worin auch das wasserlösliche Alkyd aufgenommen wurde, als auch bei einer Miniemulsion von Monomeren und Alkyd (vorgescherte Präemulsion) werden die Viskositäten sehr hoch und der einzusetzende Alkyd-Anteil ist begrenzt.

Das Polymerisat wird als Bindemittelzusammensetzung in die Farb- oder Lackmischung gegeben.

Das Anstrichmittel enthält weitere für Anstrichmittel übliche Hilfsstoffe wie beispielsweise Pigmente. Als Pigment werden zusammenfassend alle Pigmente und Füllstoffe, z. B. Farbpigmente, Weißpigmente und anorganische Füllstoffe bezeichnet.

Genannt seien anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten.

Auch synthetische Weißpigmente mit Lufteinschlüssen zur Erhöhung der Lichtstreuung können eingesetzt werden. Beispiele sind die Rhopaque™-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Für die erfindungsgemäßen glänzenden Anstrichmittel sind allenfalls geringe Mengen sehr feinteiliger Füllstoffe akzeptabel. Vorzugsweise wird auf den Einsatz von Füllstoffen verzichtet.

Der Anteil der Pigmente kann durch die Pigmentvolumenkonzentration (PVK), das ist der Quotient aus Volumen der Pigmente zum Gesamtvolumen des getrockneten Anstrichmittels, beschrieben werden. Die erfindungsgemäßen Hochglanzlacke haben eine PVK im Bereich von 12 bis 35 %, vorzugsweise 15 bis 30 %.

Das erfindungsgemäße wässrige Anstrichmittel kann neben dem Polymeren und Pigment weitere Hilfsmittel enthalten.

Zu den üblichen Hilfsmitteln zählen neben den bei der Polymerisation eingesetzten Emulgatoren, Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Genannt seien weiter Verlaufsmittel, Entschäumer, Biozide und Verdicker.

Als Verdicker in Betracht kommen z. B. Assoziativverdicker. Bevorzugte Assoziativverdicker sind Polyurethanverdicker. Die Menge des Verdickers beträgt vorzugsweise weniger als 1 Gew.-%, besonders bevorzugt weniger als 0,6 Gew.-% Verdicker fest auf Anstrichmittel.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d.h. in der Regel die wässrige Dispersion des Polymeren mit der Pigmentpaste bzw. Pigmentdispersion zu vermischen.

Die erfindungsgemäßen Anstrichmittel enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber die Gesamtmenge an Bindemittel fest, Pigment und Hilfsmittel fest. Bei den flüchtigen Bestandteilen handelt es sich vorwiegend um Wasser.

Vorzugsweise handelt es sich bei dem Anstrichmittel um ein hochglänzendes Anstrichmittel.

Durch Additivierung - Zugabe eines Photoinitiators oder Sikkativierung kann eine Oberflächenvernetzung be-schleunigt werden.

Als Photoinitiatoren kommen solche infrage, die durch Sonnenlicht angeregt werden, beispielsweise Benzophenon oder Benzophenonabkömmlinge. Zur Sikkativierung eignen sich die für wässrige Alkydharze empfohlenen Metallverbindungen, beispielsweise auf Basis von Co oder Mn (Überblick in U.Poth, Seite 183 f).

Die Bestimmung des Glanzes des Anstrichmittels erfolgt nach DIN EN ISO 2813: Das Anstrichmittel wird mit 240 $\mu$m Spaltweite auf eine Glasplatte aufgetragen und 72 Stunden lang bei Raumtemperatur getrocknet. Der Prüfkörper wird in ein kalibriertes Reflektometer Typ haze-gloss (Fa. Byk-Gardner, Geretsried) eingesetzt, und der Reflektometerwert bei 20° und 60° Einstrahlwinkel, sowie der Haze (Glanzschleier) abgelesen. Der ermittelte Reflektometerwert ist ein Maß für den Glanz (je höher der Wert, desto höher der Glanz).

Der Glanz der Hochglanzlacke ist vorzugsweise größer 60 bei 20° und größer 80 bei 60°.

Der Reflektometerwert wird bestimmt bei 23 °C und dimensionslos angegeben in Abhängigkeit vom Einfallswinkel, z. B. 40 bei 20°.

Das erfindungsgemäße Anstrichmittel kann in üblicher Weise auf Substrate aufgebracht werden, z. B. durch Streichen, Spritzen, Tauchen, Rollen,- oder Rakeln.

Die erfindungsgemäßen Anstrichmittel werden eingesetzt im Bereich der dekorativen Beschichtungen für glänzende und hochglänzende Oberflächen. Untergründe können Holz, Metal, Kunststoff, Papier oder sonstige sein.

Die erfindungsgemäßen Anstrichmittel zeichnen sich durch einfache Handhabung, gute Verarbeitungseigenschaften, hohes Deckvermögen und vor allem hohen Glanz aus. Die Anstrichmittel sind schadstoffarm. Das verwendete Arbeitsgerät lässt sich leicht mit Wasser reinigen.

Beispiele

Beispiel 1

In einem mit Dosiereinrichtungen und Temperaturregelung ausgerüsteten Polymerisationsgefäß wurden vorgelegt:

| Vorlage: | 108,5 g | Wasser |
|---|---|---|
| | 19,1 g | einer Polystyrolsaatdispersion mit einem Feststoffgehalt von 33% und einer mittleren Teilchengröße von 30 nm |
| | 1,5 g | einer 15%igen Lösung von Natriumlaurylsulfat |

und unter Rühren auf 85 °C erhitzt. Anschließend wurde, unter Aufrechterhaltung dieser Temperatur 10% von Zulauf 3 zugegeben und 5 min gerührt. Danach wurde Zulauf 1 und 2 in 180 min zudosiert und parallel dazu die Restmenge von Zulauf 3 in 195 min.

| Zulauf 1: | 52,2 g | Wasser |
|---|---|---|
| | 51 g | einer 15%igen Lösung von Natriumlaurylsulfat |
| | 99 g | n-Butylacrylat |
| | 81,9 g | Methylmethacrylat |
| | 55,2 g | Styrol |
| | 11,4 g | Acetoacetoxyethylmethacrylat |
| Zulauf 2: | 194,5 g | Wasser |
| | 12 g | einer 25%igen Ammoniaklösung |
| | 270 g | WorléeSol® 61 E |
| Zulauf 3: | 70,2 g | Wasser |
| | 1,8 g | Ammoniumperoxodisulfat |

Nach Beenden von Zulauf 3 wurde anschließend 30 min nachpolymerisiert und mit 1,62 g Ammoniak (als 25%ige wässrige Lösung) neutralisiert. Danach wurde 5.4 g Wasserstoffperoxid (als 5%ige wässrige Lösung) zugegeben und eine Lösung von 0,23 g Ascorbinsäure (ASCS) in 2,03 g Wasser in 60 min zudosiert.

Anschließend wurde die Dispersion abgekühlt und filtriert über ein 125 $\mu$m Filter. Es wurde 1,04 kg einer 45%igen Dispersion erhalten.

Beispiel 2 - 6

Wie Beispiel 1, aber in Zulauf 2 nur

| Zulauf 2: | 151,3 g | Wasser |
|---|---|---|
| | 9,3 g | einer 25%igen Ammoniaklösung |
| | 210 g | WorléeSol® 61E |

und es wurden ca. 900 g 45%igen Dispersionen erhalten. Die Beispiele unterscheiden sich, wie in der Tabelle 1 aufgelistet.

Tabelle 1: Gestaltung der Zuläufe bei den Beispielen 2 bis 6

| | Zulauf 1 | Zulauf 2 | | | |
|---|---|---|---|---|---|
| | | In Vorlage | als Zulauf | ab Start Zulauf 1 | nach Ende Zulauf 1 |
| Beispiel 2 | 180 min | - | alles | 180 min | - |
| Beispiel 3 | 180 min | 1/3 der Menge | 2/3 der Menge | 120 min | - |
| Beispiel 4 | 180 min | - | alles | 120 min | - |
| Beispiel 5 | 120 min | - | alles | - | 60 min |
| Beispiel 6 | 180 min | - | alles | - | 60 min, während Dosierung ASCS |

Beispiel 7

In einem mit Dosiereinrichtungen und Temperaturregelung ausgerüsteten Polymerisationsgefäß wurden vorgelegt:

| Vorlage: | 116,1 g | Wasser |
|---|---|---|
| | 19,2 g | einer Polystyrolsaatdispersion mit einem Feststoffgehalt von 33% und einer mittleren Teilchengröße von 30 nm |
| | 1,5 g | einer 15%igen Lösung von Natriumlaurylsulfat |

und unter Rühren auf 85°C erhitzt. Anschließend wurde, unter Aufrechterhaltung dieser Temperatur 10% von Zulauf 3 zugegeben und 5 min gerührt. Danach wurde Zulauf 1 und 2 in 180 min zudosiert und parallel dazu die Restmenge von Zulauf 3 in 195 min.

| Zulauf 1: | 79,5 g | Wasser |
|---|---|---|
| | 51,2 g | einer 15%igen Lösung von Natriumlaurylsulfat |
| | 117,4 g | n-Butylacrylat |
| | 97,1 g | Methylmethacrylat |
| | 65,5 g | Styrol |
| | 13,5 g | Acetoacetoxyethylmethacrylat |

| Zulauf 2: | 371,7 g | WorléeSol® 61 E mit $NH_3$ neutralisiert (Feststoffgehalt 42.5 %) |
|---|---|---|

| Zulauf 3: | 72,2 g | Natriumperoxodisulfat (2.5 Gew.-%) |
|---|---|---|

Nach Beenden von Zulauf 3 wurde anschließend 30 min nachpolymerisiert und mit 0.51 g Ammoniak (als 25%ige wässrige Lösung) neutralisiert. Danach wurde 5,4 g Wasserstoffperoxid (als 5%ige wässrige Lösung) zugegeben und eine Lösung von 0.23 g Ascorbinsäure (ASCS) in 2,3 g Wasser in 60 min zudosiert.
Anschließend wurde die Dispersion abgekühlt und über einen 125 $\mu$m Filter filtriert. Es wurde 1,04 kg einer 45%igen Dispersion erhalten.

Beispiel 8

Wie Beispiel 7, aber:

| | | |
|---|---|---|
| Zulauf 3: | 108,3 g | Natriumperoxodisulfat (2,5 Gew.-%) |

Beispiel 9

Wie Beispiel 7, aber:

| | | |
|---|---|---|
| Zulauf 3: | 51,9 g | Natriumperoxodisulfat (7 Gew.-%) |

Beispiel 10

Wie Beispiel 7, aber:

| | | |
|---|---|---|
| Zulauf 3: | 64,5 g | Natriumperoxodisulfat (7 Gew.-%) |

Beispiel 11

Wie Beispiel 7, aber:

| | | |
|---|---|---|
| Zulauf 1: | 58,6 g | Wasser |
| | 51,2 g | einer 15%igen Lösung von Natriumlaurylsulfat |
| | 60,0 g | n-Butylacrylat |
| | 154,4 g | n-Butylmethacrylat |
| | 65,5 g | Styrol |
| | 13,5 g | Acetoacetoxyethylmethacrylat |

Beispiel 12

Wie Beispiel 11, aber:

| | | |
|---|---|---|
| Zulauf 3: | 54,2 g | Natriumperoxodisulfat (5 Gew.-%) |

Beispiel 13

Wie Beispiel 11, aber

| | | |
|---|---|---|
| Zulauf 3: | 72.2 g | Natriumperoxodisulfat (5 Gew.-%) |

Beispiel 14

Wie Beispiel 11, aber:

| | | |
|---|---|---|
| Zulauf 3: | 90.3 g | Natriumperoxodisulfat (5 Gew.-%) |

Beispiel 15

Wie Beispiel 7, aber Zugabe des Alkyds (Zulauf 2) mit nicht konstanter Rate

Dosiergeschwindigkeit Zulauf 2:

12,5 g; 22,5 g; 32,5 g; 58,1 g; 98,1 g; 148,1 g je 30 Minuten

Beispiel 16

Wie Beispiel 7, aber Zugabe des Alkyds (Zulauf 2) mit nicht konstanter Rate

Dosiergeschwindigkeit Zulauf 2:

12,5 g; 32,5 g; 52,5 g; 78,1 g; 98,3 g; 118,1 g je 30 Minuten

Beispiel 17

Wie Beispiel 7, aber Polymerisationstemperatur 95 °C.

Beispiel 18

Wie Beispiel 7, aber Polymerisationstemperatur 80 °C.

Beispiel 19

Wie Beispiel 7, aber

|  |  |  |
|---|---|---|
| Zulauf 2: | 217 g | WorléeSol® 61 E mit $NH_3$ neutralisiert (Feststoffgehalt 72,8 %) |

Beispiel 20

Wie Beispiel 1, aber in Zulauf 2 nur

|  |  |  |
|---|---|---|
| Zulauf 2: | 108,1 g | Wasser |
|  | 6,7 g | einer 25%igen Ammoniaklösung |
|  | 150 g | WorléeSol® 61E |

und es wurden 830 g einer 45%igen Dispersion erhalten.

Vergleichsbeispiel 1

In einem mit Dosiereinrichtungen und Temperaturregelung ausgerüsteten Polymerisationsgefäß wurden vorgelegt:

|  |  |  |
|---|---|---|
| Vorlage: | 57,5 g | Wasser |
|  | 3,1 g | einer 15%igen Lösung von Natriumlaurylsulfat |

und unter Rühren auf 85 °C erhitzt. Anschließend wurde, unter Aufrechterhaltung dieser Temperatur 10 % von Zulauf 1 und 2 nacheinander zugegeben und 10 min anpolymerisiert. Danach wurden die Restmengen von Zulauf 1 in 180 min und parallel dazu von Zulauf 2 in 195 min zudosiert.

|  |  |  |
|---|---|---|
| Zulauf 1: | 142,6 g | Wasser |
|  | 30,7 g | einer 15%igen Lösung von Natriumlaurylsulfat |
|  | 5,8 g | einer 20%igen Lösung eines Fettalkoholethoxylats mit einem Ethoxylierungsgrad von ca. 18 (Lutensol® AT 18 der Fa. BASF) |
|  | 76,7 g | WorléeSol® 61E |

|  |  |
|---|---|
| 69 g | n-Butylacrylat (BA) |
| 57,5 g | Methylmethacrylat (MMA) |
| 34,5 g | Styrol (S) |
| 4,6 g | Methacrylsäure |
| 6,9 g | Acetoacetoxyethylmethacrylat |

Zuerst wird das Alkydharz im Monomergemisch BA, MMA und S gelöst. Dann werden die restlichen Einsatzstoffe zugegeben. Mit Hilfe einer Ultraschallsonde wurde von diesem Gemisch eine stabile Miniemulsion hergestellt.

| Zulauf 2: | 11,4 g | Wasser |
|---|---|---|
| | 0,9 g | Natriumperoxodisulfat |

Nach Beenden von Zulauf 2 wurde anschließend 30 min nachpolymerisiert und mit 3,65 g Ammoniak (als 25%ige wässrige Lösung) neutralisiert. Danach wurde 2,8 g Wasserstoffperoxid (als 5%ige wässrige Lösung) zugegeben und eine Lösung von 0,12 g Ascorbinsäure in 11,5 g Wasser in 60 min zudosiert.
Anschließend wurde die Dispersion abgekühlt und filtriert über ein 125 $\mu$m Filter. Es wurde 519 g einer 44%igen Dispersion erhalten.

Vergleichsbeispiel 2

In einem mit Dosiereinrichtungen und Temperaturregelung ausgerüsteten Polymerisationsgefäß wurden vorgelegt:

| Vorlage: | 100,3 g | Wasser |
|---|---|---|
| | 16,5 g | einer Polystyrolsaatdispersion mit einem Feststoffgehalt von 33% und einer mittleren Teilchengröße von 30 nm |
| | 1,5 g | einer 15%igen Lösung von Natriumlaurylsulfat |

und unter Rühren auf 85°C erhitzt. Anschließend wurde, unter Aufrechterhaltung dieser Temperatur 10% von Zulauf 2 zugegeben und 5 min gerührt. Danach wurde Zulauf 1 in 180 min zudosiert und parallel dazu die Restmenge von Zulauf 3 in 195 min.

| Zulauf 1: | 219,5 g | Wasser |
|---|---|---|
| | 44,2 g | einer 15%igen Lösung von Natriumlaurylsulfat |
| | 182 g | WorléeSol® 61 E |
| | 8,1 g | einer 25%igen Ammoniaklösung |
| | 101,4 g | n-Butylacrylat |
| | 83,9 g | Methylmethacrylat |
| | 56,6 g | Styrol |
| | 11,7 g | Acetoacetoxyethylmethacrylat |

Zuerst wird das Alkydharz in Wasser und Ammoniak gelöst und dann werden die restlichen Einsatzstoffe zugegeben und emulgiert.

| Zulauf 3: | 60,8 g | Wasser |
|---|---|---|
| | 1,6 g | Ammoniumperoxodisulfat |

Nach Beenden von Zulauf 3 wurde anschließend 30 min nachpolymerisiert und mit 1,4 g Ammoniak (als 25%ige wässrige Lösung) neutralisiert. Danach wurde 4,7 g Wasserstoffperoxid (als 5%ige wässrige Lösung) zugegeben und eine Lösung von 0,20 g Ascorbinsäure in 1,8 g Wasser in 60 min zudosiert.
Anschließend wurde die Dispersion abgekühlt und filtriert über ein 125 $\mu$m Filter. Es wurde 1,04 kg einer 43%igen Dispersion erhalten.

Vergleichsdispersion 1

In einem mit Dosiereinrichtung und Temperaturregelung ausgerüstetem Polymerisationsgefäß wurden vorgelegt:

| Vorlage: | 528 g | Wasser |
|---|---|---|
| | 46,7 g | einer Polystyrolsaatdispersion mit einem Feststoffgehalt von 33% und |

(fortgesetzt)

|  | einer mittleren Teilchengröße von 30 nm |
| 3,67 g | einer 15%igen Lösung von Natriumlaurylsulfat |

und unter Rühren auf 85 °C erhitzt. Anschließend wurde unter Aufrechterhaltung dieser Temperatur 5 % von Zulauf 2 zugegeben und 5 min gerührt. Danach wurde Zulauf 1 in 180 min zudosiert und parallel dazu die Restmenge von Zulauf 2 in 195 min.

| Zulauf 1: | 543,2 g | Wasser |
| | 125,4 g | einer 15%igen Lösung von Natriumlaurylsulfat |
| | 458,0 g | n-Butylacrylat |
| | 399,6 g | Methylmethacrylat |
| | 165,1 g | Styrol |
| | 22,78 g | Methacrylsäure |
| | 21,45 g | Ureidomethacrylat |
| | 33 g | Bisomer MPEG® 350 MA (der Fa. Laporte Performance Chemicals UK) |
| Zulauf 2: | 83,6 g | Wasser |
| | 4,4 g | Natriumperoxodisulfat |

Nach Beenden von Zulauf 1 wurde 22 g Wasser zugegeben; nach Beenden von Zulauf 2 wurde anschließend 30 min nachpolymerisiert und mit 7,47 g Ammoniak (als 25%ige wässrige Lösung) neutralisiert. Danach wurde 13,2 g Wasserstoffperoxid (als 5%ige wässrige Lösung) zugegeben und eine Lösung von 0,557 g Ascorbinsäure in 4,96 g Wasser in 60 min zudosiert.

Anschließend wurde die Dispersion abgekühlt und filtriert über ein 125 $\mu$m Filter. Es wurde 2,48 kg einer 46%igen Dispersion erhalten.

Herstellung der wässrigen Lacke

Die einzelnen Komponenten (Herstellernachweis s. Tabelle 2) wurden in der Menge (Gewichtsteile) und Reihenfolge, wie in Tabelle 3 angegeben, unter Rühren mit einem Zahnscheibenrührer zudosiert. Nach Zugabe des Tiantdioxidpigmentes wurde die Drehzahl erhöht auf 2000 Upm und solange dispergiert, bis die Pigmentpaste glatt, d. h. frei von Klümpchen war. Dann ließ man, falls erforderlich, abkühlen auf Raumtemperatur und gab die restlichen Komponenten bei reduzierter Drehzahl zu.

Tabelle 2

| Funktion | Name | Hersteller |
|---|---|---|
| Alkydlack | Sikkens Rubbol® AZ | Akzo Nobel, Wunstorf |
| Dispergiermittel | Disperbyk® 190 | Byk-Chemie GmbH, Wesel |
| | Pigmentverteiler MD 20 und Ultradispers AB30 | BASF AG, Ludwigshafen |
| Entschäumer | Byk® 020 | Byk-Chemie GmbH, Wesel |
| | Tego Airex® 902W | Tego Chemie, Essen |
| Konservierungsmittel | Parmetol® A26 | Schülke & Mayr, Norderstedt |
| Lösemittel | Solvenon® DPM | BASF AG, Ludwigshafen |
| | Texanol® | Eastman Deutschland, Köln |
| Titaniumdioxidpigment | Tronox® CR 828 Kronos® 2190 | Kerr-McGee, Uerdingen Kronos Titan GmbH, Leverkussen |
| Verdicker | Collacral® LR 8989 | BASF AG, Ludwigshafen |
| | DSX 3000, DSX 2000 und DSX 1514 | Cognis Deutschland GmbH&Co.KG, Düsseldorf |

Tabelle 3: Formulierung der Vergleichsdispersion 1 und der (Vergleichs)Beispiele

| Komponente | Name | Vergleichsdispersion | (Vergleichs) Beispiele |
|---|---|---|---|
| Wasser | | 65 | 74,5 |
| Dispergiermittel | Pigmentverteiler MD 20 | 20 | - |
| Verdicker | Ultradispers AB 30 | 15 | - |
| Entschäumer | Byk® 020 | - | 5 |
| Dispergiermittel | Disperbyk® 190 | - | 23,5 |
| Verdicker | DSX 2000/1514 (1:0.3) | - | 12 |
| Konservierungsmittel | Parmetol® A26 | 2 | - |
| Entschäumer | Tego Airex® 902W | 4 | - |
| Verdicker | DSX 3000 | 17 | - |
| | Collacral® LR 8989 | 15 | - |
| Titaniumoxid | Tronox® CR 828 | 225 | - |
| | Kronos® 2190 | - | 236 |
| Paste | | 363 | 351 |
| Wasser | | | 27 |
| Lösemittel | Texanol® | 15 | - |
| | Solvenon® DPM | 17 | - |
| | propyleneglycol | | 22 |
| Entschäumer | Tego Airex® 902W | 2 | - |
| Bindemittel | | 570 | 600 |
| Wasser | | 33 | - |
| Gesamt | | 1000 | 1000 |

Prüfung der wässrigen Lacke

Die Bestimmung des Glanzes des Anstrichmittels erfolgt nach DIN EN ISO 2813: Das Anstrichmittel wird mit 240 $\mu$m Spaltweite auf eine Glasplatte aufgetragen und 72 Stunden lang bei Raumtemperatur getrocknet. Der Prüfkörper wird in ein kalibriertes Reflektometer Typ haze-gloss (Fa. Byk-Gardner, Geretsried) eingesetzt, und der Reflektometerwert bei 20 und 60° Einstrahlwinkel, sowie der Harze (Glanzschleier) abgelesen. Der ermittelte Reflektometerwert ist ein Maß für den Glanz (je höher der Wert, desto höher der Glanz).

Die Glanzwerte der Beispiele, Vergleichsbeispiele, der Vergleichsdispersion und eines Alkydlacks sind in der Tabelle 4 zusammengefasst.

Tabelle 4: Glanzwerte der (Vergleichs)Beispiele, der Vergleichsdispersion und des Alkydlacks

| Versuch | Beschreibung | Glanz | | |
|---|---|---|---|---|
| | | bei 60° | bei 20° | Glanzschleier |
| Beispiel 1 | mit 45% Alkyd | 90 | 82 | 0 |
| Beispiel 2 | mit 35% Alkyd | 90 | 79 | 32 |
| Beispiel 3 | mit 35% Alkyd | 90 | 74 | 80 |
| Beispiel 4 | mit 35% Alkyd | 91 | 78 | 52 |
| Beispiel 5 | mit 35% Alkyd | 88 | 71 | 82 |
| Beispiel 6 | mit 35% Alkyd | 89 | 74 | 67 |

(fortgesetzt)

| Versuch | Beschreibung | Glanz | | |
|---|---|---|---|---|
| | | bei 60° | bei 20° | Glanzschleier |
| Beispiel 7 | 0,4 pphm NaPS | 91 | 79 | 38 |
| Beispiel 8 | 0,6 pphm NaPS | 91 | 81 | 28 |
| Beispiel 9 | 0,8 pphm NaPS | 91 | 81 | 5 |
| Beispiel 10 | 1,0 pphm NaPS | 91 | 82 | 1 |
| Beispiel 11 | BMA statt MMA, 0,4 pphm NaPS | 90 | 81 | 4 |
| Beispiel 12 | BMA statt MMA, 0,6 pphm NaPS | 91 | 82 | 0 |
| Beispiel 13 | BMA statt MMA, 0,8 pphm NaPS | 91 | 82 | 2 |
| Beispiel 14 | BMA statt MMA, 1,0 pphm NaPS | 90 | 82 | 0 |
| Beispiel 15 | Alkydgradient | 88 | 70 | 83 |
| Beispiel 16 | Alkydgradient | 90 | 75 | 80 |
| Beispiel 17 | 95°C | 91 | 80 | 30 |
| Beispiel 18 | 80°C | 90 | 75 | 76 |
| Beispiel 19 | Alkyd höherer Feststoffgehalt | 91 | 78 | 41 |
| Beispiel 20 | mit 25% Alkyd | 88 | 67 | 101 |
| Vergleichsbeispiel 1 | Mini-Emulsionspolymerisation | 87 | 67 | 75 |
| Vergleichsbeispiel 2 | Polymerisation mit einem Zulauf | 90 | 80 | 20 |
| Vergleichsdispersion 1 | ohne Alkyd | 85 | 62 | 156 |
| Lösemittelbasierter Alkydlack | Rubbol® AZ | 92 | 83 | 17 |

**Patentansprüche**

1.  Verfahren zur Herstellung wässriger Bindemittelzusammensetzungen durch Emulsionspolymerisation von

    (A) mindestens einem $C_1$-$C_{10}$-Alkyl(meth)acrylat, und/oder einer vinylaromatischen Verbindung mit bis zu 20 C-Atomen oder Mischungen davon (Monomere A),
    (B) sowie gegebenenfalls weiteren Monomeren B und
    (C) mindestens einem wasserlöslichen Alkydharz mit einem gewichtsmittleren Molekulargewicht zwischen 5000 und 40 000 g/mol,

    **dadurch gekennzeichnet, dass** die Polymerisation der Monomere A sowie gegebenenfalls B und der Alkyde C in Form eines parallelen Zulaufverfahrens durchgeführt wird.

2.  Verfahren gemäß Anspruch 1, **dadurch gekennzeichnet, dass** das Emulsionspolymerisat insgesamt

    (A) 20 bis 90 Gew.-% der Monomere A,
    (B) 0 bis 20 Gew.-% weiterer Monomere B sowie
    (C) 10 bis 60 Gew.-% Alkyd C

    enthält.

3.  Verfahren gemäß Anspruch 1 oder 2, **dadurch gekennzeichnet, dass** die vinylaromatischen Verbindungen ausgewählt sind aus der Gruppe Vinyltoluol, $\alpha$- und p-Methylstyrol, $\alpha$-Butylstyrol, 4-n-Butylstyrol, 4-n-Decylstyrol oder Styrol oder Mischungen davon.

4.  Verfahren gemäß Anspruch 1 oder 2, **dadurch gekennzeichnet, dass** die $C_1$-$C_{10}$-Alkyl(meth)acrylate ausgewählt sind aus der Gruppe Methyl(meth)acrylat, n-, iso- oder tert.-Butyl(meth)acrylat, Ethylacrylat oder 2-Ethylhexyl(meth) acrylat oder Mischungen davon.

5.  Verfahren gemäß Anspruch 1 oder 2, **dadurch gekennzeichnet, dass** die Monomere B ausgewählt sind aus der Gruppe der Hydroxylgruppen enthaltenden Monomere.

6.  Verfahren gemäß Anspruch 5, daurch gekennzeichnet, dass die Monomere B ausgewählt sind aus der Gruppe der $C_1$-$C_{10}$-Hydroxyalkyl(meth)acrylate, (Meth)acrylamid, ethylenisch ungesättigten Säuren, und deren Anhydride, Dicarbonsäuren und deren Anhydride oder Halbester, Ureido(meth)acrylat, Acetoacetoxy (meth)acrylat oder Diacetonacrylamid.

7.  Verfahren gemäß Anspruch 5 oder 6, **dadurch gekennzeichnet, dass** als ethylenisch ungesättigte Säure (Meth) acrylsäure oder deren Anhydride und als Dicarbonsäuren Itaconsäure, Maleinsäure, Fumarsäure, Maleinsäureanhydrid, oder Mischungen davon eingesetzt werden.

8.  Verfahren gemäß einem der Ansprüche 1 bis 7, **dadurch gekennzeichnet, dass** die Glasübergangstemperatur eines Polymers, das aus einer separaten Polymerisation des Monomerengemisches aus A bzw. A und B hervorgehen würde kleiner 50 °C und > 20 °C ist.

9.  Verwendung der nach einem Verfahren gemäß einem der Ansprüche 1 bis 88 hergestellten Bindemittelzusammensetzung, als Komponente in Anstrichmitteln.

10. Verwendung der nach einem Verfahren gemäß einem der Ansprüche 1 bis 8 hergestellten Bindemittelzusammensetzung, als Komponente in Hochglanzlacken.

11. Anstrichmittel enthaltend eine nach einem Verfahren gemäß einem der Ansprüche 1 bis 8 hergestellten Bindemittelzusammensetzung.

12. Anstrichmittel gemäß Anspruch 11, **dadurch gekennzeichnet, dass** es sich um einen Hochglanzlack mit einem Glanz größer 60 bei 20° (° ist Einfallswinkel) handelt.

**Claims**

1.  A process for preparing aqueous binder compositions by emulsion polymerization of

    (A) at least one $C_1$-$C_{10}$ alkyl (meth)acrylate, and/or a vinylaromatic compound having up to 20 C atoms, or mixtures thereof (monomers A),
    (B) and also, optionally, further monomers B, and
    (C) at least one water-soluble alkyd resin having a weight-average molecular weight between 5000 and 40 000 g/mol,

    wherein the polymerization of the monomers A and also, optionally, B and the alkyds C is carried out in the form of a parallel feed process.

2.  The process according to claim 1, wherein the emulsion polymer comprises in total

    (A) 20% to 90% by weight of monomers A,
    (B) 0% to 20% by weight of further monomers B, and
    (C) 10% to 60% by weight of alkyd C.

3.  The process according to claim 1 or 2, wherein the vinylaromatic compounds are selected from the group vinyltoluene, $\alpha$- and p-methylstyrene, $\alpha$-butylstyrene, 4-n-butylstyrene, 4-n-decylstyrene or styrene or mixtures thereof.

4.  The process according to claim 1 or 2, wherein the $C_1$-$C_{10}$ alkyl (meth)acrylates are selected from the group methyl (meth)acrylate, n-, iso- or tert-butyl (meth)acrylate, ethyl acrylate or 2-ethylhexyl (meth)acrylate or mixtures thereof.

5.  The process according to claim 1 or 2, wherein the monomers B are selected from the group of monomers comprising hydroxyl groups.

6. The process according to claim 5, wherein the monomers B are selected from the group of $C_1$-$C_{10}$ hydroxyalkyl (meth)acrylates, (meth)acrylamide, ethylenically unsaturated acids, and their anhydrides, dicarboxylic acids and their anhydrides or monoesters, ureido(meth)acrylate, acetoacetoxy(meth)acrylate or diacetoneacrylamide.

7. The process according to claim 5 or 6, wherein the ethylenically unsaturated acid used is (meth)acrylic acid or the anhydrides thereof and the dicarboxylic acids used are itaconic acid, maleic acid, fumaric acid, maleic anhydride, or mixtures thereof.

8. The process according to any one of claims 1 to 7, wherein the glass transition temperature of a polymer originating theoretically from a separate polymerization of the monomer mixture from A and from A and B, respectively, is less than 50°C and > 20°C.

9. The use of the binder composition prepared by a process according to any one of claims 1 to 8 as a component in coating materials.

10. The use of the binder composition prepared by a process according to any one of claims 1 to 8 as a component in high-gloss varnishes.

11. A coating material comprising a binder composition prepared by a process according to any one of claims 1 to 8.

12. The coating material according to claim 11, which is a high-gloss varnish having a gloss of greater than 60 at 20° (° is incident angle).


**Revendications**

1. Procédé pour la préparation de compostions aqueuses de liants, par polymérisation en émulsion de

   (A) au moins un (méth)acrylate d'alkyle en $C_1$-$C_{10}$ et/ou un composé vinylaromatique ayant jusqu'à 20 atomes de carbone ou mélanges de ceux-ci (monomères A),
   (B) ainsi qu'éventuellement d'autres monomères B et
   (C) au moins une résine alkyde hydrosoluble ayant une masse moléculaire moyenne en poids comprise entre 5 000 et 40 000 g/mole,

   **caractérisé en ce qu'**on effectue la polymérisation des monomères A ainsi qu'éventuellement B et des alkydes C sous forme d'un procédé à alimentation parallèle.

2. Procédé selon la revendication 1, **caractérisé en ce que** le produit de polymérisation en émulsion contient au total

   (A) 20 à 90 % en poids des monomères A,
   (B) 0 à 20 % en poids d'autres monomères B ainsi que
   (C) 10 à 60 % en poids d'alkyde C.

3. Procédé selon la revendication 1 ou 2, **caractérisé en ce que** les composés vinylaromatiques sont choisis dans le groupe constitué par le vinyltoluène, l'$\alpha$- et le p-méthylstyrène, l'$\alpha$-butylstyrène, le 4-n-butylstyrène, le 4-n-décylstyrène ou le styrène ou des mélanges de ceux-ci.

4. Procédé selon la revendication 1 ou 2, **caractérisé en ce que** les (méth)acrylates d'alkyle en $C_1$-$C_{10}$ sont choisis dans le groupe constitué par le (méth)acrylate de méthyle, le (méth)acrylate de n-, iso- ou tert-butyle, l'acrylate d'éthyle ou le (méth)acrylate de 2-éthylhexyle ou des mélanges de ceux-ci.

5. Procédé selon la revendication 1 ou 2, **caractérisé en ce que** les monomères B sont choisis dans les groupe des monomères contenant des groupes hydroxy.

6. Procédé selon la revendication 5, **caractérisé en ce que** les monomères B sont choisis dans le groupe constitué par les (méth)acrylates d'hydroxyalkyle en $C_1$-$C_{10}$, le (méth)acrylamide, les acides à insaturation éthylénique et leurs anhydrides, les acides dicarboxyliques et leurs anhydrides ou hémiesters, l'uréido(méth)acrylate, l'acétoacétoxy(méth)acrylate ou le diacétone-acrylamide.

7.  Procédé selon la revendication 5 ou 6, **caractérisé en ce qu'**on utilise comme acide à insaturation éthylénique l'acide (méth)acrylique ou les anhydrides de tels acides et comme acides dicarboxyliques l'acide itaconique, l'acide maléique, l'acide fumarique, l'anhydride maléique ou des mélanges de ceux-ci.

8.  Procédé selon l'une quelconque des revendication 1 à 7, **caractérisé en ce que** la température de transition vitreuse d'un polymère qui proviendrait d'une polymérisation séparée du mélange de monomères de A ou A et B est inférieure à 50 °C et > 20 °C.

9.  Utilisation de la composition de liant préparée conformément à un procédé selon l'une quelconque des revendications 1 à 8, en tant que composant dans des produits pour enduction.

10. Utilisation de la composition de liant préparée conformément à un procédé selon l'une quelconque des revendications 1 à 8, en tant que composant dans des peintures très brillantes.

11. Produit pour enduction contenant une composition de liant préparée conformément à un procédé selon l'une quelconque des revendications 1 à 8.

12. Produit pour enduction selon la revendication 11, **caractérisé en ce qu'**il s'agit d'une peinture très brillante ayant un brillant supérieur à 60 sous 20° (° est l'angle d'incidence).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1382663 A
- EP 874875 A
- DE 3132937
- US 6333378 B
- EP 083137 A
- US 4116903 A

**In der Beschreibung aufgeführte Nicht-Patentliteratur**

- Ullmann's Encyclopedia of Industrial Chemistry. VCH Weinheim, 1992, vol. A 21, 169
- **ZOSEL.** *Farbe und Lack,* 1976, vol. 82, 125-134
- Ullmanns Enzyklopädie der technischen Chemie. 1980, vol. 19, 17, 18
- Ullmann's Encyclopedia of Industrial Chemistry. VCH, 1992, vol. A 21, 169
- **J. BRANDRUP ; E.H. IMMERGUT.** Polymer Handbook. J. Wiley, 1989
- **U. POTH.** Polyester und Alkydharze. Vincentz Network, 2005
- **HOUBEN-WEYL.** Methoden der organischen Chemie. *Makromolekulare Stoffe,* 1961, vol. XIV/1, 411-420
- Methoden der organischen Chemie. **HOUBEN-WEYL.** Makromolekulare Stoffe. Georg Thieme Verlag, 1961, vol. 14/1, 192-208